(19) Europäisches Patentamt / European Patent Office / Office européen des brevets

(11) **EP 3 879 243 B1**

(12) **EUROPÄISCHE PATENTSCHRIFT**

(45) Veröffentlichungstag und Bekanntmachung des Hinweises auf die Patenterteilung:
**18.01.2023  Patentblatt 2023/03**

(21) Anmeldenummer: **21156245.9**

(22) Anmeldetag: **10.02.2021**

(51) Internationale Patentklassifikation (IPC):
**G01G 19/10** *(2006.01)*      **G01G 19/16** *(2006.01)*

(52) Gemeinsame Patentklassifikation (CPC):
**G01G 19/10; G01G 19/16;** A01B 63/1145

(54) **VERFAHREN ZUR BESTIMMUNG EINER ACHSLAST EINES TRAKTORS**

METHOD FOR DETERMINING AN AXLE LOAD OF A TRACTOR

PROCÉDÉ DE DÉTERMINATION D'UNE CHARGE PAR ESSIEU D'UN TRACTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2020  DE 102020203285**

(43) Veröffentlichungstag der Anmeldung:
**15.09.2021  Patentblatt 2021/37**

(73) Patentinhaber: **Deere & Company**
**Moline, IL 61265 (US)**

(72) Erfinder:
• **GAEDKER, SIMON**
**68163 Mannheim (DE)**
• **REMMELMANN, ANDREAS**
**68163 Mannheim (DE)**
• **ROESSEL, NORMAN**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 0 433 669**

**Beschreibung**

Die Erfindung betrifft ein Verfahren zur Bestimmung einer Achslast an einer Fahrzeugachse eines Traktors mit einem Kraftheber, an welchen ein Anbaugerät koppelbar ist.

Für verschiedenste Anwendungen eines Traktors ist es oftmals von Bedeutung, die Achslast an einer Fahrzeugachse zu bestimmen und diese Information an den Fahrer zu übermitteln oder für automatisierte Arbeitsschritte des Traktors zu verwenden.

Die Druckschrift EP 0 433 669 A1 offenbart ein Verfahren zur Bestimmung einer Achslast an einer Fahrzeugachse eines Traktors.

Der Erfindung liegt die Aufgabe zugrunde, eine Achslast des Traktors technisch einfach und kostengünstig zu bestimmen. Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird mittels eines Verfahrens eine Achslast an einer Fahrzeugachse eines Traktors bestimmt. Der Traktor weist einen Kraftheber auf, an welchen eine Nutzlast koppelbar ist. Der Kraftheber wird von einer hydraulischen Pumpe angetrieben. Deren Pumpendruck am Pumpenausgang stellt sich in Abhängigkeit von der gekoppelten Nutzlast ein. Der eingestellte Pumpendruck wird ermittelt und die Achslast wird in Abhängigkeit von dem ermittelten Pumpendruck bestimmt. Somit dient der Pumpendruck als Hilfsgröße zur Bestimmung einer Achslast des Traktors. Da der Pumpendruck, insbesondere bei einer lastgeregelten Pumpe, mit dem Gewicht der gekoppelten Nutzlast korreliert, bildet die Berücksichtigung des Pumpendruckes eine technisch einfache Maßnahme für eine verhältnismäßig genaue Bestimmung der Achslast.

Dieses Verfahren vermeidet andere umständliche oder technisch aufwändige Verfahren zur Bestimmung der Achslast, wenn einerseits die Kenntnis einer aktuellen Achslast wichtig ist und andererseits das Gewicht der gekoppelten Nutzlast nicht bekannt ist oder sich während des Arbeitseinsatzes immer wieder verändert.

Ein sich änderndes Gewicht der Nutzlast ist beispielsweise relevant bei Anbaugeräten (z.B. Saatgutbehälter, Düngerstreuer).

Der Pumpendruck wird beispielsweise im Falle eines lastgeregelten Hydrauliksystems bei einem geöffnetem Kraftheber-Steuerventil durch das Gewicht der Nutzlast eingestellt.

Der für seine Hubbewegungen von einer hydraulischen Pumpe angetriebene Kraftheber hat üblicherweise hydraulische Bestandteile, z.B. einen hydraulischen Hubzylinder und/oder einen hydraulischen Oberlenker. Der Kraftheber ist insbesondere als ein Dreipunkt-Kraftheber mit einem Oberlenker und zwei Unterlenkern ausgebildet.

Mittels des Verfahrens kann die Achslast einer Fahrzeugachse (Hinterachse oder Vorderachse) des Traktors bestimmt werden.

Der am Pumpenausgang anstehende Pumpendruck wird vorzugsweise mittels eines Sensors, insbesondere Drucksensors, ermittelt. Hierdurch kann das Verfahren mit minimalem zusätzlichen Bauteileaufwand oder mit bereits ohnehin serienmäßig am Traktor vorhandenen Bauteilen durchgeführt werden. Somit unterstützt das Verfahren eine kostengünstige und technisch einfache Lösung für die Bestimmung einer Achslast.

Um die Verfahrensdurchführung technisch einfach zu halten, wird die Achslast vorzugsweise aus bereitgestellten Kenndaten ermittelt, welche ein Verhältnis zwischen dem Pumpendruck und dem Gewicht der Nutzlast repräsentieren bzw. wiedergeben. Die Kenndaten werden vorzugsweise als Kennlinie oder ein diese Kennlinie enthaltendes Kennlinienfeld mit mehreren Kennlinien bereitgestellt. Die Kenndaten können beispielsweise im Rahmen einer Kalibrierung außerhalb eines Arbeitseinsatzes des Traktors generiert werden.

Vorzugsweise wird für die Bestimmung der Achslast mindestens eine der folgenden Größen berücksichtigt:

- einer entlang eines Unterlenkers des Krafthebers wirkenden Zugkraft oder einer Kraftkomponente dieser Zugkraft,
- einem Neigungswinkel eines Oberlenkers des Krafthebers relativ zu einer Bezugsgeraden, insbesondere zu einer Fahrzeug-Horizontalen,
- einem Abstand entlang einer Fahrzeug-Vertikalen zwischen jeweils einer Kopplungsstelle eines Oberlenkers und eines Unterlenkers des Krafthebers zur Kopplung der Nutzlast.

Die Werte der vorgenannten Größen sind für den jeweiligen Arbeitseinsatz des Traktors entweder bekannt oder können mit geringem technischen Aufwand (z.B. mit herkömmlichen Sensormitteln) am Traktor ermittelt werden. Dies unterstützt eine technisch einfache Bestimmung der Achslast.

Außerdem können für die Bestimmung der Achslast die Längen einzelner Hebelarme zwischen Drehachsen und wirksamen Kräften an Bauteilen (z.B. Unterlenker, Oberlenker, Hubzylinder, Hubstrebe) des Krafthebers und/oder die Längen spezifischer Abstände am Kraftheber oder zwischen Kraftheber und Nutzlast berücksichtigt werden. Die einzelnen Längen sind üblicherweise bekannt. Vorzugsweise sind diese Längen für unterschiedliche Hubpositionen des Krafthebers als tabellarische Daten bereitgestellt. Diese Daten können z.B. durch einen Kalibrierzyklus generiert oder vom Werk vorgegeben sein.

Vorzugsweise wird die Achslast in Abhängigkeit von mindestens einem der folgenden Abstände entlang einer Fahrzeug-Horizontalen bestimmt. Dabei gehen diese Abstände von der Fahrzeugachse der gesuchten Achslast aus. Bevorzugte Abstände sind

- ein Abstand zu einer weiteren Last (z.B. Ballastiergewicht) am Traktor,
- ein Abstand zu einer anderen Fahrzeugachse,
- ein Abstand zu einem Schwerpunkt des Traktors,
- ein Abstand zu einer Kopplungsstelle eines Oberlenkers oder eines Unterlenkers des Krafthebers zur Kopplung der Nutzlast. Diese Abstände stehen üblicherweise als bekannte Fahrzeugabmessungen und/oder als bekannte Hubgeometrie des Krafthebers zur Verfügung. Sie tragen deshalb zu einer technisch einfachen Bestimmung der gesuchten Achslast bei.

Der Pumpendruck wird vorzugsweise zeitlich außerhalb einer Hubbewegung des Krafthebers, d.h. im Stillstand des Krafthebers, ermittelt. Dies vermeidet eine etwaige Verfälschung des ermittelten Pumpendruckes durch dynamische Kräfte.

Eine möglichst exakte Ermittlung des Pumpendruckes kann unterstützt werden, indem er bei Stillstand (Fahrgeschwindigkeit = 0) des Traktors ermittelt wird.

Vorzugsweise sind andere an die hydraulische Pumpe angeschlossene hydraulische Lasten bzw. Verbraucher des Traktors während der Ermittlung des Pumpendruckes ausgeschaltet. Hierdurch wird die Genauigkeit des ermittelten Pumpendruckes weiter unterstützt.

Die Nutzlast ist vorzugsweise als ein Anbaugerät (z.B. Saatgutbehälter) oder als ein Ballastgewicht ausgebildet. Dies ermöglicht eine Bestimmung der Achslast bei unterschiedlichsten Anwendungsfällen des Traktors.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    eine Seitenansicht eines Traktors mit einem heckseitigen Kraftheber und einer daran gekoppelten Nutzlast, und

Fig. 2    eine vergrößerte Seitenansicht des heckseitigen Krafthebers.

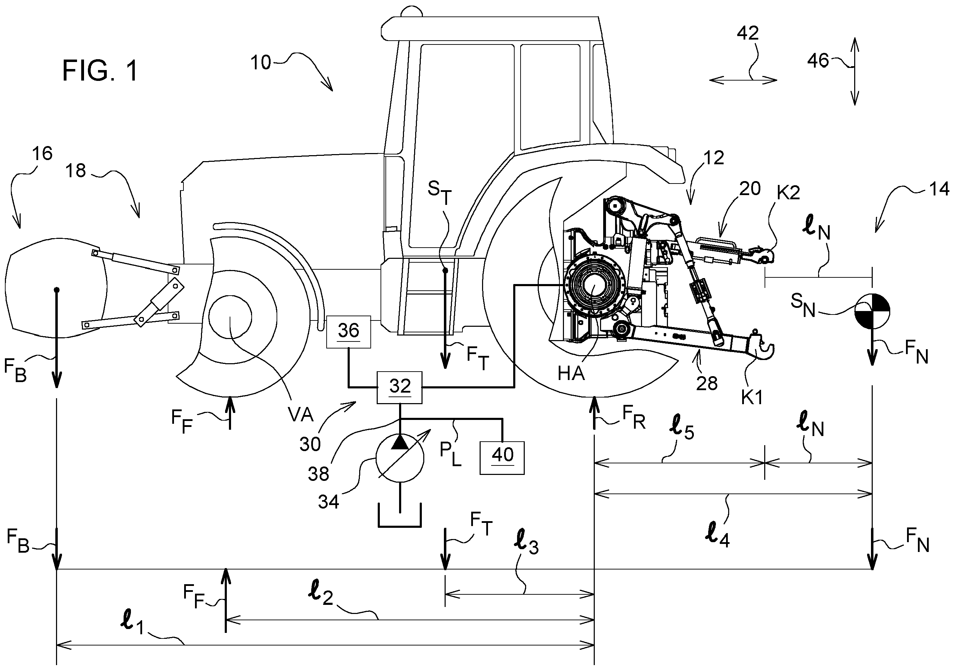

Fig.1 zeigt einen Traktor 10 mit einem heckseitigen Dreipunkt-Kraftheber 12 und einer daran gekoppelten Nutzlast in Form eines Anbaugerätes 14. Frontseitig trägt der Traktor 10 als Nutzlast ein Ballastiergewicht 16, welches an einen frontseitigen Kraftheber 18 des Traktors 10 gekoppelt ist.

Der heckseitige Kraftheber 12 enthält einen hydraulischen Oberlenker 20, einen sich am Traktor 10 gelenkig abstützenden Hubarm 22, einen sich am Traktor 10 und am Hubarm 22 gelenkig abstützenden hydraulischen Hubzylinder 24 und eine längenverstellbare Hubstrebe 26, die sich am Hubarm 22 und an einem Unterlenker 28 gelenkig abstützt. Üblicherweise enthält der Kraftheber 12 zwei lotrecht zur Zeichenblattebene beabstandete Unterlenker 28, welche jeweils mit der vorbeschriebenen Hebelkonstruktion verbunden sind.

Der Unterlenker 28 weist eine Kopplungsstelle K1 auf, während der Oberlenker 20 eine Kopplungsstelle K2 trägt. Beide Kopplungsstellen K1, K2 dienen der mechanischen Kopplung des Anbaugerätes 14.

Für seine Hubbewegungen ist der Kraftheber 12 an einen schematisch dargestellten Hydraulikkreislauf 30 angeschlossen. Der Hydraulikkreislauf 30 enthält eine hydraulische Steuerung 32 (z.B. Steuergerät, Steuerventile) und eine lastgeregelte hydraulische Pumpe 34. Letztere bewirkt eine Versorgung des Krafthebers 12 als auch weiterer hydraulischer Verbraucher 36 des Traktors 10 mit einem Hydraulikmedium.

An einem Pumpenausgang 38 der Pumpe 34 ist ein Drucksensor 40 angeordnet, um den aktuellen Pumpendruck bzw. Lastdruck $p_L$ zu messen.

Der Traktor 10 bewegt sich entlang einer Fahrtrichtung 42, welche parallel zu einer Fahrzeug-Horizontalen 44 verläuft. Lotrecht dazu verläuft eine Vertikalrichtung 46 des Traktors 10.

Die Bestimmung einer Achslast des Traktors 10 beruht auf nachfolgend beschriebenen physikalischen Überlegungen. Dabei wird das Verfahren beispielhaft anhand der Bestimmung einer Achslast $F_R$ an einer Hinterachse HA dargestellt.

Am Traktor 10 herrscht ein Kräftegleichgewicht zwischen einer Gewichtskraft $F_B$ des Ballastiergewichtes 16, der Achslast $F_F$ an einer Vorderachse VA, einer Gewichtskraft $F_T$ des Traktors 10, der gesuchten und zu bestimmenden Achslast $F_R$ an der Hinterachse HA und einer Gewichtskraft $F_N$ der Nutzlast 14.

Wegen des Kräftegleichgewichtes gilt für die Summe obiger Kräfte

$$F_B - F_F + F_T - F_R + F_N = 0 \qquad\qquad (Gl.\ 1)$$

Die zu bestimmende Achslast $F_R$ ist dann

$$F_R = F_B - F_F + F_T + F_N \qquad\qquad (Gl.\ 2)$$

Die Gewichtskraft $F_B$ des Ballastiergewichtes 16 und die Gewichtskraft $F_T$ des Traktors 10 sind üblicherweise bekannt. Die Achslast $F_F$ an der Vorderachse VA wird ebenfalls als bekannt vorausgesetzt, da sie über eine Sensorik ermittelt werden kann, z.B. mittels Drucksensor bei einer hydraulischen Achsfederung. Folglich ist lediglich die Gewichtskraft $F_N$ der Nutzlast 14 unbekannt.

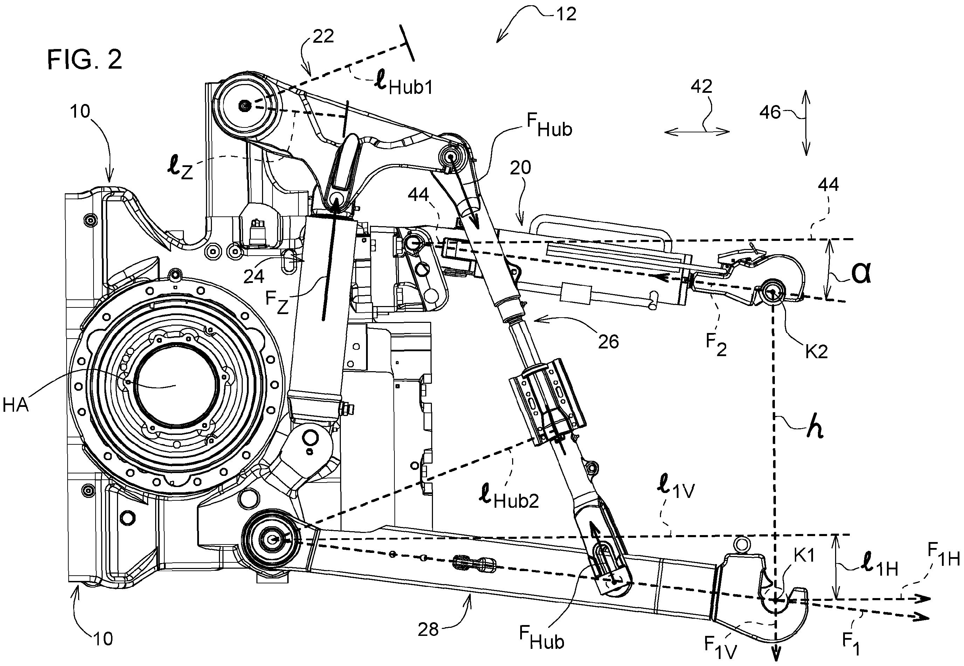

Die unbekannte Gewichtskraft $F_N$ der Nutzlast 14 lässt sich in Abhängigkeit von den Werten nachfolgend beschriebener Größen am Traktor 10 ermitteln. Diese Größen sind insbesondere Fig. 2 entnehmbar.

An der Kopplungsstelle K2 des Oberlenkers 20 gilt für das Momentengleichgewicht:

$$F_N \bullet l_N - F_{1H} \bullet h = 0 \qquad\qquad (Gl.\ 3)$$

oder

$$F_{1H} = F_N \bullet l_N/h\ , \qquad\qquad (Gl.\ 4)$$

wobei $F_{1H}$ die horizontale Kraftkomponente der an der Kopplungsstelle K1 angreifenden Zugkraft $F_1$ ist, $l_N$ der horizontale Abstand (entlang der Fahrzeug-Horizontalen 44) zwischen der Kopplungsstelle K2 und einem Schwerpunkt $S_N$ der Nutzlast 14 ist und h der vertikale Abstand (entlang der Fahrzeug-Vertikalen 46) zwischen den beiden Kopplungsstellen K1, K2 ist.

Für ein horizontales Kräftegleichgewicht an den Kopplungsstellen K1, K2 gilt:

$$F_{1H} - F_2 \bullet \cos \alpha = 0 \qquad\qquad (Gl.\ 5)$$

oder

$$F_2 = F_{1H} \bullet 1/\cos \alpha\ , \qquad\qquad (Gl.\ 6)$$

wobei $F_2$ die an der Kopplungsstelle K2 angreifende Haltekraft ist und $\alpha$ ein Neigungswinkel des Oberlenkers 20 bezüglich der Fahrzeug-Horizontalen 44 ist.

Für ein vertikales Kräftegleichgewicht an den Kopplungsstellen K1, K2 gilt:

$$F_N - F_{1V} - F_2 \bullet \sin\alpha = 0 \qquad\qquad (Gl.\ 7)$$

oder

$$F_N = F_{1V} + F_2 \bullet \sin \alpha\ , \qquad\qquad (Gl.\ 8)$$

wobei $F_{1V}$ die vertikale Kraftkomponente der an der Kopplungsstelle K1 angreifenden Zugkraft $F_1$ ist.

Die Gleichungen Gl. 4 und Gl. 6 in Gleichung Gl. 8 eingesetzt ergibt

$$F_N = F_{1V} \bullet 1/(1- \tan \alpha \bullet l_N/h)\ . \qquad\qquad (Gl.\ 9)$$

In Gleichung Gl. 9 lässt sich die Vertikalkomponente $F_{1V}$ über folgende zwei Momentengleichgewichte am Kraftheber 12 ermitteln. Am Hubarm 22 gilt:

$$F_{Hub} \quad = \quad F_Z \cdot l_Z/l_{Hub1} \ , \tag{Gl. 10}$$

wobei $F_{Hub}$ eine an der Hubstrebe 26 angreifende Kraft ist und $l_{Hub1}$ ein dazugehöriger Hebelarm ist. $F_Z$ ist eine an dem Hubzylinder 24 angreifende Kraft und $l_Z$ ist ein dazugehöriger Hebelarm.

Am Unterlenker 28 gilt:

$$F_{Hub} \cdot l_{Hub2} + F_{1H} \cdot l_{1H} - F_{1V} \cdot l_{1V} \quad = \quad 0 \tag{Gl. 11}$$

und nach $F_{1V}$ umgestellt

$$F_{1V} \quad = \quad (F_{Hub} \cdot l_{Hub2}/l_{1V}) + (F_{1H} \cdot l_{1H}/l_{1V}) \ . \tag{Gl. 12}$$

Die Gleichung Gl. 10 in Gleichung Gl. 12 eingesetzt ergibt für $F_{1V}$

$$F_{1V} \quad = \quad (F_Z \cdot l_Z \cdot l_{Hub2}/l_{Hub1} \cdot l_{1V}) + (F_{1H} \cdot l_{1H}/l_{1V}) \ . \tag{Gl. 13}$$

Die Gleichung Gl. 13 in Gleichung Gl. 9 eingesetzt ergibt für die Gewichtskraft $F_N$ der Nutzlast 14

$$F_N = 1/l_{1V} \cdot (F_Z \cdot l_Z \cdot l_{Hub2}/l_{Hub1} + F_{1H} \cdot l_{1H}) \cdot 1/(1-\tan\alpha \cdot l_N/h) \ . \tag{Gl. 14}$$

Die am Hubzylinder 24 angreifende Kraft $F_Z$ ist durch die Gleichung $F_Z = p_L \cdot A_Z$ bekannt, wobei $A_Z$ die bekannte Querschnittsfläche des Hubzylinders 24 ist. Hierdurch ergibt sich für die Gleichung Gl. 14

$$F_N = 1/l_{1V} \cdot (p_L \cdot A_Z \cdot l_Z \cdot l_{Hub2}/l_{Hub1} + F_{1H} \cdot l_{1H}) \cdot 1/(1-\tan\alpha \cdot l_N/h) . \tag{Gl. 15}$$

In der Gleichung Gl. 15 ist der horizontale Abstand $l_N$ zwischen der Kopplungsstelle K2 und dem sich oftmals verändernden Schwerpunkt S der Nutzlast 14 meist nicht unmittelbar bekannt. Der horizontale Abstand $l_N$ in Gleichung Gl. 15 kann aber ersetzt werden durch

$$l_N \quad = \quad l_4 - l_5 \ , \tag{Gl. 16}$$

wie Fig. 1 entnehmbar ist. Der Abstand $l_5$ ist aus der Hubgeometrie des Krafthebers 12 bekannt. Der Abstand $l_4$ ergibt sich aus einer Betrachtung des Momentengleichgewichtes an der Hinterachse HA wie folgt:

$$l_4 = (F_B \cdot l_1 - F_F \cdot l_2 + F_T \cdot l_3)/F_N \ . \tag{Gl. 17}$$

Für den horizontalen Abstand $l_N$ gilt folglich

$$l_N = ((F_B \cdot l_1 - F_F \cdot l_2 + F_T \cdot l_3)/F_N) - l_5 \ . \tag{Gl. 18}$$

Die Abstände $l_1$, $l_2$, $l_3$, $l_4$, $l_5$ verlaufen entlang der Fahrzeug-Horizontalen 44 und gehen von der Fahrzeugachse HA der gesuchten bzw. zu bestimmenden Achslast $F_R$ aus. Ausgehend jeweils von der Hinterachse HA erstreckt sich

- der Abstand $l_1$ zu einer weiteren Last (Ballastiergewicht 16),
- der Abstand $l_2$ zu der Vorderachse VA,
- der Abstand $l_3$ zu einem Schwerpunkt $S_T$ des Traktors 10,
- der Abstand $l_4$ zu dem Schwerpunkt $S_N$ der Nutzlast 14, und
- der Abstand $l_5$ zu der Kopplungsstelle K1 des Unterlenkers 28 oder zu der Kopplungsstelle K2 des Oberlenkers 20.

Mittels Gleichung Gl. 18 kann der horizontale Abstand $l_N$ in Gleichung Gl. 15 ersetzt und dann die Gleichung Gl. 15 wieder nach der Gewichtskraft $F_N$ aufgelöst werden.

Für die Ermittlung der Gewichtskraft $F_N$ werden dann die bekannten Abstände $l_1$, $l_2$, $l_3$ (bekannte Abmessungen des Traktors 10) und der bekannte Abstand $l_5$ (bekannte Hubgeometrie des Krafthebers 12) aus Gleichung Gl. 18 verwendet.

Die übrigen Größen aus Gleichung Gl. 15 sind hinsichtlich ihrer Werte in unterschiedlichen Hubpositionen des Krafthebers 12 ebenfalls bekannt oder können durch herkömmliche Sensormittel technisch einfach ermittelt werden.

Somit kann die Achslast $F_R$ aus Gleichung Gl. 2 in Abhängigkeit von den Größen gemäß Gleichung Gl. 15 und Gleichung Gl. 18, d.h. in Abhängigkeit von dem Pumpendruck bzw. Lastdruck $p_L$ und weiterer bekannter Größen bestimmt werden.

In spezifischen Hubpositionen des Krafthebers 12 kann die Gleichung Gl. 15 weiter vereinfacht werden, z.B. bei waagerecht entlang der Fahrzeug-Horizontalen 44 verlaufendem Oberlenker 20 ($\tan\alpha = 0$) oder bei waagerecht entlang der Fahrzeug-Horizontalen 44 verlaufendem Unterlenker 28 ($l_{1H} = 0$)

Die Länge h in Gleichung Gl. 15 ist üblicherweise durch die Konstruktion der jeweiligen Nutzlast 14 bekannt.

Die einzelnen Längen $l_z$, $l_{Hub2}$, $l_{Hub1}$, $l_{1H}$, $l_{1V}$ in Gleichung Gl. 15 sind ebenfalls bekannt. Insbesondere sind diese Längen für unterschiedliche Hubpositionen des Krafthebers 12 als tabellarische Daten bereitgestellt. Diese Daten können z.B. durch einen Kalibrierzyklus generiert oder vom Werk vorgegeben sein.

Der Neigungswinkel $\alpha$ kann beispielsweise durch am Oberlenker 20 angeordnete Sensormittel (z.B. Inertial- oder Neigungssensor) ermittelt werden.

Andere am Oberlenker 20 angeordnete Sensormittel können eine Haltekraft $F_2$ des Oberlenkers 20 ermitteln. Durch letztere Sensormittel kann der Neigungswinkel $\alpha$ alternativ über die Gleichung $\alpha = \arccos(F_{1H}/F_2)$ ermittelt werden, wenn auch die Kraftkomponente $F_{1H}$ bekannt ist.

Die Kraftkomponente $F_{1H}$ kann über eine Messung der Zugkraft $F_1$ ermittelt werden. Hierzu können am traktorseitigen Anlenkbereich des Unterlenkers 28 geeignete Sensormittel (z.B. Kraftmessbolzen, Biegestab) angeordnet sein.

Im Falle eines hydraulischen Oberlenkers 20 kann über das horizontale Kräftegleichgewicht $F_{1H} = F_2 \cdot \cos\alpha$ die horizontale Kraftkomponente $F_{1H} = p_L \cdot A_{OL} \cdot \cos\alpha$ ermittelt werden, wobei der Neigungswinkel $\alpha$ ermittelt wird und $A_{OL}$ die bekannte Querschnittsfläche des Zylinders des Oberlenkers 20 ist.

Durch entsprechende physikalische Überlegungen am frontseitigen Kraftheber 18 lässt sich auch eine unbekannte Achslast $F_F$ an der Vorderachse VA ermitteln.

**Patentansprüche**

1. Verfahren zur Bestimmung einer Achslast ($F_R$) an einer Fahrzeugachse (HA) eines Traktors (10) mit einem Kraftheber (12), an welchen eine Nutzlast (14) koppelbar ist, wobei

   - der Kraftheber (12) von einer hydraulischen Pumpe (34) angetrieben wird, **dadurch gekennzeichnet, dass** deren Pumpendruck ($p_L$) sich in Abhängigkeit von der gekoppelten Nutzlast (14) einstellt,
   - der eingestellte Pumpendruck ($p_L$) ermittelt wird, und
   - die Achslast ($F_R$) in Abhängigkeit von dem ermittelten Pumpendruck ($p_L$) bestimmt wird.

2. Verfahren nach Anspruch 1, **dadurch gekennzeichnet, dass** der Pumpendruck ($p_L$) mittels eines Sensors (40) ermittelt wird.

3. Verfahren nach Anspruch 1 oder 2, **dadurch gekennzeichnet, dass** die Achslast ($F_R$) der Nutzlast (14) aus bereitgestellten Kenndaten ermittelt wird, welche ein Verhältnis zwischen dem Pumpendruck ($p_L$) und dem Gewicht ($F_N$) der Nutzlast (14) repräsentieren.

4. Verfahren nach einem der vorhergehenden Ansprüche, **dadurch gekennzeichnet, dass** die Achslast ($F_R$) in Abhängigkeit von mindestens einer der folgenden Größen bestimmt wird:

   - einer entlang eines Unterlenkers (28) des Krafthebers (12) wirkenden Zugkraft ($F_1$) oder einer Kraftkomponente ($F_{1H}$) dieser Zugkraft ($F_1$),
   - einem Neigungswinkel ($\alpha$) eines Oberlenkers (20) des Krafthebers (12) relativ zu einer Bezugsgeraden (44),
   - einem Abstand (h) entlang einer Fahrzeug-Vertikalen (46) zwischen jeweils einer Kopplungsstelle (K1, K2) eines Oberlenkers (20) und eines Unterlenkers (28) des Krafthebers (12) zur Kopplung der Nutzlast (14).

**5.** Verfahren nach einem der vorhergehenden Ansprüche, **dadurch gekennzeichnet, dass** die Achslast ($F_R$) in Abhängigkeit von mindestens einem der folgenden Abstände entlang einer Fahrzeug-Horizontalen (44) ausgehend von der Fahrzeugachse (HA) der gesuchten Achslast ($F_R$) bestimmt wird:

- einem Abstand ($l_1$) zu einer weiteren Last (16) am Traktor (10),
- einem Abstand ($l_2$) zu einer anderen Fahrzeugachse (VA),
- einem Abstand ($l_3$) zu einem Schwerpunkt ($S_T$) des Traktors (10),
- einem Abstand ($l_5$) zu einer Kopplungsstelle (K1, K2) eines Oberlenkers (20) oder eines Unterlenkers (28) des Krafthebers (12) zur Kopplung der Nutzlast (14).

**6.** Verfahren nach einem der vorhergehenden Ansprüche, **dadurch gekennzeichnet, dass** der Pumpendruck ($p_L$) zeitlich außerhalb einer Hubbewegung des Krafthebers (12) ermittelt wird.

**7.** Verfahren nach einem der vorhergehenden Ansprüche, **dadurch gekennzeichnet, dass** der Pumpendruck ($p_L$) im Stillstand des Traktors (10) ermittelt wird.

**8.** Verfahren nach einem der vorhergehenden Ansprüche, **dadurch gekennzeichnet, dass** der Pumpendruck ($p_L$) bei ausgeschalteten hydraulischen Verbrauchern (36) des Traktors (10) ermittelt wird.

**9.** Verfahren nach einem der vorhergehenden Ansprüche, **dadurch gekennzeichnet, dass** die Nutzlast als ein Anbaugerät (14) oder als ein Ballastiergewicht (16) an den Kraftheber (12, 18) gekoppelt wird.


**Claims**

**1.** Method for determining an axle load ($F_R$) on a vehicle axle (HA) of a tractor (10) having a power lift (12) to which a payload (14) is able to be coupled, wherein

- the power lift (12) is driven by a hydraulic pump (34), **characterized in that** the pump pressure ($p_L$) thereof is set depending on the coupled payload (14),
- the set pump pressure ($p_L$) is ascertained, and
- the axle load ($F_R$) is determined depending on the ascertained pump pressure ($p_L$).

**2.** Method according to Claim 1, **characterized in that** the pump pressure ($p_L$) is ascertained by means of a sensor (40).

**3.** Method according to Claim 1 or 2, **characterized in that** the axle load ($F_R$) of the payload (14) is ascertained from provided characteristics which represent a ratio between the pump pressure ($p_L$) and the weight ($F_N$) of the payload (14).

**4.** Method according to one of the preceding claims, **characterized in that** the axle load ($F_R$) is determined depending on at least one of the following variables:

- a tensile force ($F_1$) acting along a lower link (28) of the power lift (12) or a force component ($F_{1H}$) of this tensile force ($F_1$),
- an inclination angle ($\alpha$) of an upper link (20) of the power lift (12) relative to a reference straight line (44),
- a distance (h) along a vehicle vertical (46) between respective coupling points (K1, K2) of an upper link (20) and of a lower link (28) of the power lift (12) for coupling the payload (14).

**5.** Method according to one of the preceding claims, **characterized in that** the axle load ($F_R$) is determined depending on at least one of the following distances along a vehicle horizontal (44) starting from the vehicle axle (HA) of the sought axle load ($F_R$):

- a distance ($l_1$) from a further load (16) on the tractor (10),
- a distance ($l_2$) from another vehicle axle (VA),
- a distance ($l_3$) from a centre of gravity ($S_T$) of the tractor (10),
- a distance ($l_5$) from a coupling point (K1, K2) of an upper link (20) or of a lower link (28) of the power lift (12) for coupling the payload (14).

6. Method according to one of the preceding claims, **characterized in that** the pump pressure ($p_L$) is ascertained temporally outside a lifting movement of the power lift (12).

7. Method according to one of the preceding claims, **characterized in that** the pump pressure ($p_L$) is ascertained when the tractor (10) is at a standstill.

8. Method according to one of the preceding claims, **characterized in that** the pump pressure ($p_L$) is ascertained with hydraulic consumers (36) of the tractor (10) switched off.

9. Method according to one of the preceding claims, **characterized in that** the payload is coupled as an attachment (14) or as a ballasting weight (16) to the power lift (12, 18).


**Revendications**

1. Procédé pour déterminer une charge d'essieu ($F_R$) sur un essieu de véhicule (HA) d'un tracteur (10) avec un relevage (12) auquel peut être accouplée une charge utile (14),

   - le relevage (12) étant entraîné par une pompe hydraulique (34), **caractérisé en ce que** sa pression de pompe ($p_L$) se règle en fonction de la charge utile (14) accouplée,
   - la pression de pompe ($p_L$) réglée est déterminée, et
   - la charge d'essieu ($F_R$) est déterminée en fonction de la pression de pompe ($p_L$) déterminée.

2. Procédé selon la revendication 1, **caractérisé en ce que** la pression de pompe ($p_L$) est déterminée au moyen d'un capteur (40).

3. Procédé selon la revendication 1 ou 2, **caractérisé en ce que** la charge d'essieu ($F_R$) de la charge utile (14) est déterminée à partir de données caractéristiques établies, qui représentent un rapport entre la pression de pompe ($p_L$) et le poids ($F_N$) de la charge utile (14).

4. Procédé selon l'une quelconque des revendications précédentes, **caractérisé en ce que** la charge d'essieu ($F_R$) est déterminée en fonction d'au moins l'une des grandeurs suivantes :

   - une force de traction ($F_1$) agissant le long d'un bras inférieur (28) du relevage (12) ou une composante de force ($F_{1H}$) de cette force de traction ($F_1$),
   - un angle d'inclinaison ($\alpha$) d'un bras supérieur (20) du relevage (12) par rapport à une droite de référence (44),
   - une distance (h) le long d'une verticale (46) du véhicule entre respectivement un emplacement d'accouplement (K1, K2) d'un bras supérieur (20) et d'un bras inférieur (28) du relevage (12) pour l'accouplement de la charge utile (14).

5. Procédé selon l'une quelconque des revendications précédentes, **caractérisé en ce que** la charge d'essieu ($F_R$) est déterminée en fonction d'au moins l'une des distances suivantes le long d'une horizontale (44) du véhicule à partir de l'essieu de véhicule (HA) de la charge d'essieu ($F_R$) recherchée :

   - une distance ($l_1$) par rapport à une autre charge (16) sur le tracteur (10),
   - une distance ($l_2$) par rapport à un autre essieu de véhicule (VA),
   - une distance ($l_3$) par rapport à un centre de gravité ($S_T$) du tracteur (10),
   - une distance ($l_5$) par rapport à un emplacement d'accouplement (K1, K2) d'un bras supérieur (20) ou d'un bras inférieur (28) du relevage (12) pour l'accouplement de la charge utile (14).

6. Procédé selon l'une quelconque des revendications précédentes, **caractérisé en ce que** la pression de pompe ($p_L$) est déterminée dans le temps en dehors d'un mouvement de levage du relevage (12).

7. Procédé selon l'une quelconque des revendications précédentes, **caractérisé en ce que** la pression de pompe ($p_L$) est déterminée à l'arrêt du tracteur (10).

8. Procédé selon l'une quelconque des revendications précédentes, **caractérisé en ce que** la pression de pompe ($p_L$) est déterminée lorsque les consommateurs hydrauliques (36) du tracteur (10) sont éteints.

9. Procédé selon l'une quelconque des revendications précédentes, **caractérisé en ce que** la charge utile est accouplée au relevage (12, 18) sous la forme d'un accessoire (14) ou sous la forme d'un poids de lestage (16).

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0433669 A1